# EUROPEAN PATENT SPECIFICATION

(11) **EP 3 053 363 B1**
(45) Date of publication and mention of the grant of the patent: **02.08.2017**
(21) Application number: 14821879.5
(22) Date of filing: 05.12.2014
(51) Int. Cl.: H04W 4/22, H04W 4/02, H04W 4/20, H04M 11/04

(54) **A SYSTEM AND A METHOD FOR MANAGING A POTENTIAL EMERGENCY SITUATION**
SYSTEM UND VERFAHREN ZUR VERWALTUNG EINER POTENZIELLEN NOTFALLSITUATION
SYSTÈME ET PROCÉDÉ DE GESTION D'UNE SITUATION D'URGENCE POTENTIELLE

(30) Priority: 05.12.2013 SE 1351444
(43) Date of publication of application: 10.08.2016
(73) Proprietor: Svensk Trygghetstjänst AB, 211 19 Malmö (SE)
(72) Inventor: RÖME, Daniel, S-226 51 Lund (SE); RÖME, Madeleine, S-226 51 Lund (SE); JOHANSSON, Kennet, S-217 52 Malmö (SE); HOLMBERG, Jonas, S-226 51 Lund (SE)
(74) Representative: Brann AB
(86) International application number: PCT/SE2014/051460
(87) International publication number: WO 2015/084252

(56) References cited:
- WO-A1-2011/023207
- WO-A1-2011/060140
- WO-A1-2013/074687

## Description

### TECHNICAL FIELD

The disclosure relates to a system and a method for managing a potential emergency situation.

### BACKGROUND

In the prelude of an emergency situation there is typically a less threatening, but escalatable, situation. It has been established that one of the most important things for the individual(s) exposed to such a situation is to collect as much relevant information as possible in the early phase, i.e. before a real threat arises. It is also desirable to suitably store the collected information. In this way, if the situation deteriorates further and a distress situation develops, information that is possibly extremely valuable for evaluating suitable measures to apply may be timely made available to third parties, e.g. emergency authorities such as police or fire services.

US2011046920 principally presents a solution for reconstructing an occurred emergency situation. In this context, even if the general knowledge in the field is taken into account, it is still unclear how the disclosed technical teaching should be practiced in order to achieve a real-time transfer of information.

US20090125584A1 is also a disclosure in the above-described technical field. It discloses a fully automated system which is capable to localize user(s) in time and space and to communicate audio/video streams to a service defined by the user, typically a suitable authority and preferably a police department. The system includes a communication means supporting a predefined localization service, such as GPS, a server associated with the communication means, client devices, and a database which is customized in accordance with the changes of interaction sessions of client devices with the server. The user communicates with the system, e.g. sends messages to the user-defined service. The system is provided with a panic alert mechanism which, upon actuation, transmits an audio/video data stream along with the client location tag, time stamp, and client ID to the service.

Obviously, this fully automated system lacks flexibility and is more prone to false alarms then a system involving an operator able to verify its proper functioning. Moreover, a dedicated hardware, exemplified by a dispatcher console, is required to establish communication between the user in distress situation and the service, such as the police department.

US2012329420A1 and its European counterpart EP2499747A1 disclose, on a general level, a method and a system of communicating an alarm, requested via user's mobile communication device, to a remotely located intermediate. More particularly, said intermediate is part of a staffed emergency support service and it receives an alarm signal generated by a user. Upon receipt, either an audio or a video communication link is activated between the user's communication device and the intermediate. Moreover, user's personal data, typically pre-stored, as well as dynamic location information of the user's communication device, normally gathered using the device's built-in GPS-receiver, are presented to the intermediate. The intermediate may then, based on the content of the data traffic between the user and the intermediate and a location of the mobile communication device, contact a suitable third party.

The above-cited method and system offer rather limited possibilities for interaction between the user and the emergency support service. Also, creating a contact between the user and the emergency authorities requires a plurality of interventions by the user and/or the intermediate.

One objective of the present invention is therefore to provide a system and a method that alleviate at least some of the drawbacks associated with the current art.

### SUMMARY

The above stated objective is achieved by means of the method and the system according to the independent claims, and by the embodiments according to the dependent claims.

More specifically, one aspect of the present invention provides a method of managing a potential emergency situation, the method comprising:
storing static information regarding a user of a support service,
activating an interaction session between the user of a support service and an intermediary by providing at least user-entered details of an activity to the intermediary,
determining a geographical position of a portable communication device associated with the user,
storing the information regarding the geographical position of the portable communication device associated with the user,
activating collecting, by means of the portable communication device, of at least one type of information by the user and/or establishing communication between the user and the intermediary,
storing the information regarding the at least one type of information collected by the user and/or establishing communication between the user and the intermediary,
requesting an alarm such that a connection between the user and an entity of interest, such as an emergency service, is established and simultaneously therewith sending at least a first electronic message from the portable communication device to the intermediary, and
presenting at least a portion of the stored information content at least to the entity of interest.

In a second aspect of the present invention a system for managing a potential emergency situation is provided, said system comprising:
an application back-end configured to communicate with a portable communication device associated with a user;
a database configured to be in communication with the application back-end and configured to store data;
an operator back-end configured to be in communication with the application back-end and to be in communication with the database, and a software application located on the portable communication device, said application being configured to transmit data regarding geographical position of the portable communication device to the application back-end for subsequent storing in the database,
said software application further being configured to transmit data collected by the portable communication device and/or user-instigated communication (voice and other) to the application back-end for subsequent storing in the database and send at least a first electronic message from the portable communication device to the application back-end, wherein
the application itself or the database are configured to store static information regarding the user, wherein the system further comprises means for establishing a connection between the user and an entity of interest, such as an emergency service and means for presenting at least a portion of the stored information content at least to the entity of interest.

In this context, support service could be any provider of conventional security services. Moreover and as is widely known, the role of the emergency service, typically epitomized by the telephone number to be dialled in order to reach it - 112 (in EU) or 911 (in USA), in the society is inter alia to alert the concerned emergency authority, such as police or fire department, on the basis of the incoming call either received directly or indirectly, i.e. vehicled by a support service.

Moreover, the application back-end, the database and the operator back-end are parts of an intermediary. The intermediary also comprises the support service and an operator manning said service.

In the following, positive effects and advantages of the invention at hand are presented with reference to the first and the second aspects of the invention.

Since the user himself feeds the details of his imminent activity, such as a walk home or a taxi ride, into the system, a perfectly accurate data is obtained. This valuable data could not be easily obtained in any other way. Furthermore, in case of a legitimate alarm request, the user is directly connected to the entity of interest, such as the emergency service. In the same context, the personnel at the entity of interest may access collected information (e.g. static information regarding the user, audio, video or text) as soon as an alarm has been requested. Clearly, this will facilitate their timely assessment of the situation at hand and allow them to rapidly take the most appropriate measure.

Furthermore, a connection between the portable communication device and the emergency service is established via a mobile communication network, such as Global System for Mobile Communications (GSM) or Universal Mobile Telecommunications System (UMTS), as soon as the alarm has been requested. Simultaneously therewith, at least a first electronic message originating from the portable device is relayed to the intermediary, if necessary converted into a format readable by the intermediary, e.g. a web service.

In an embodiment and particularly useful in case of insufficient bandwidth, said first electronic message is at least in part transmitted to the intermediary as an SMS.

In a further embodiment, a second electronic message is also sent from the portable communication device to the intermediary. Consequently, a redundant solution is achieved where the intermediary receives two messages via two signal paths that are independent of each other. A virtually fail-safe solution of notifying the intermediary that the alarm has been requested is hereby obtained.

In a thereto related embodiment, at least one of said first and second electronic messages is at least in part transmitted to the intermediary as a web service. This is to be construed so as the web service handles the whole content of the electronic message under a part of the signal path between the portable communication device and the intermediary. Using web service is particularly suitable for machine-to-machine interaction.

In another embodiment, at least one of the stored static information, determined geographical position, the collected information and/or content of the communication between the user and the intermediary is stored at the intermediary. In this way, the stored content is easily accessible for subsequent transmittal, preferably using a secure connection, to the emergency service.

In a further embodiment at least one of the stored static information, determined geographical position, the collected information and/or content of the communication between the user and the intermediary is initially stored on the portable communication device. It is vital that the determined/collected information regarding the potential emergency situation is stored even in case of a temporary connection break-down between the portable communication device and the communication network, for instance due to poor coverage or the non-availability of the intermediary. To this end, the portable communication device may be configured to store the above content. This function may be automatically started if the content for any reason cannot be stored at the intermediary during an on-going interaction session.

In yet another embodiment, the entity of interest also receives a notification of the occurrence of the alarm and the authenticity of the alarm request is verified by the entity of interest using at least one of at least the portion of the obtained information content presented to said entity of interest and the information contained in the received notification. Accordingly, the operator at the entity of interest immediately gets access to the number associated with the user's portable communication device since this number will always be included in the content of said notification. This follows from the fact that the purpose of said notification is to reserve a spot in the queue system at the entity of interest for the current alarm request. This number could then be compared with the number from which the actual alarm request is made. In this context, the number from which the actual alarm request is made is either already visible on the display of the operator's working terminal at the entity of interest or is given by the user at the start of his/hers communication session with the entity of interest. If the comparison checks out correctly, the authenticity of the alarm request is verified. Alternatively, above comparison may be performed using the information content presented to said entity of interest, e.g. the number associated with the user's portable communication device could be pre-stored in the static information regarding the user.

In a variant, said alarm inquiry comprises transmitting a push notification to the portable communication device associated with the user. The alarm request is initiated by the intermediary and forwarded to the user. Hereby, the built-in functionalities of the hardware using an iOS^{®} operative system, both the intermediary and the portable communication device, are leveraged to enhance the user experience and facilitate triggering of an alarm. Obviously, this variant is, if suitably modified, applicable even when run on other operative systems for hand-held devices, such as Android^{™}.

In yet another variant, at least a portion of the stored information content is presented to at least one preselected recipient appearing in the static information regarding the user and/or to social media. Hereby, further persons may, at the user's choice, be notified about the on-going emergency situation. By way of example, user's family members or Facebook® contacts may be informed.

In a further embodiment, the requested alarm is recalled within a predetermined time period. In this way, an inadvertent alarm request may be overruled. The time period is adjustable while its default value is about 10 seconds.

In another embodiment, collecting of at least one type of information by the user may be remotely activated. Hereby, the collecting of relevant information may be activated by the operator of the support service. Correspondingly, if the transmittal of the relevant information to the intermediary is interrupted during an on-going interaction session, the operator may remotely reactivate the collecting of relevant information.

Also, at least one type of information collected by the user may be manipulated by means of the portable communication device. In this way, the stream of the collected information content may be adjusted depending on the capacity of the network. For instance, redundant information present in an image may be removed in order to reduce the size of the image file and/or speechless sections of the audio recording may be excluded.

In an embodiment, a user-destined alarm inquiry, e.g. transmitting a push notification to the portable communication device associated with the user, based on at least one of the content of the stored static information, determined geographical position and the collected information, and/or content of the voice communication between the user and the intermediary may be made. Here, the system is so configured that only the user may request an alarm. This solution confers upon the user a sensation of being in control of the situation - this could have a reassuring effect on him/her and in extension avoid unnecessary alarm requests.

In a further variant, the overall emergency level of the situation may be assessed, by means of the intermediary and based on at least one of the content of the stored static information, determined geographical position and the collected information, and/or content of the voice communication between the user and the intermediary, and this assessment may be presented to an operator of the support service. Hereby, the operator may be supported by a suitable mathematical model that takes into account the nature of the stored content. The model is run on the intermediary, it evaluates the facts in real-time and quantifies the likelihood of a distress situation. Once a forecast value exceeds a predetermined threshold value, the operator is alerted in a suitable way, by way of example visually, that a user-destined alarm request should be strongly considered.

In yet another variant, a push notification may be transmitted to the portable communication device associated with the user with the purpose of initiating termination of an interaction session. Such a notification may be issued if, for instance, any substantive information hasn't been collected by means of the activated portable communication device for a predetermined period of time. Hereby, all justified on-going interaction sessions, and in extension even alarm requests, are present in a system whereas the number of non-justified, but on-going interaction sessions, is continuously reduced. Obviously, this significantly alleviates the stress experienced by the operators.

In an embodiment, a system of the present invention is implemented by virtual hardware. Such an implementation offers a more flexible configuration and reduces the need for costly hardware resources.

In a thereto related embodiment, the system is configured to be run in a cloud environment. Hereby, the system becomes easily scalable such that it can readily accommodate a large influx of new users. Moreover, the system may be moved to a new host with very short lead times and without affecting the end user.

Further advantages and features of embodiments will become apparent when reading the following detailed description in conjunction with the drawings.

### BRIEF DESCRIPTION OF THE DRAWINGS

Fig. 1 shows a flow chart of the method of managing a potential emergency situation according to one embodiment of the invention.
Fig. 2 is a schematical drawing showing a system well-suited for performing the method visualised in the flow chart of Fig. 1.
Fig. 3 is a further schematical drawing showing one way of verifying the authenticity of the requested alarm.

### DETAILED DESCRIPTION OF THE PREFERRED EMBODIMENTS

The present invention will now be described more fully hereinafter with reference to the accompanying drawings, in which preferred embodiments are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like reference signs refer to like elements.

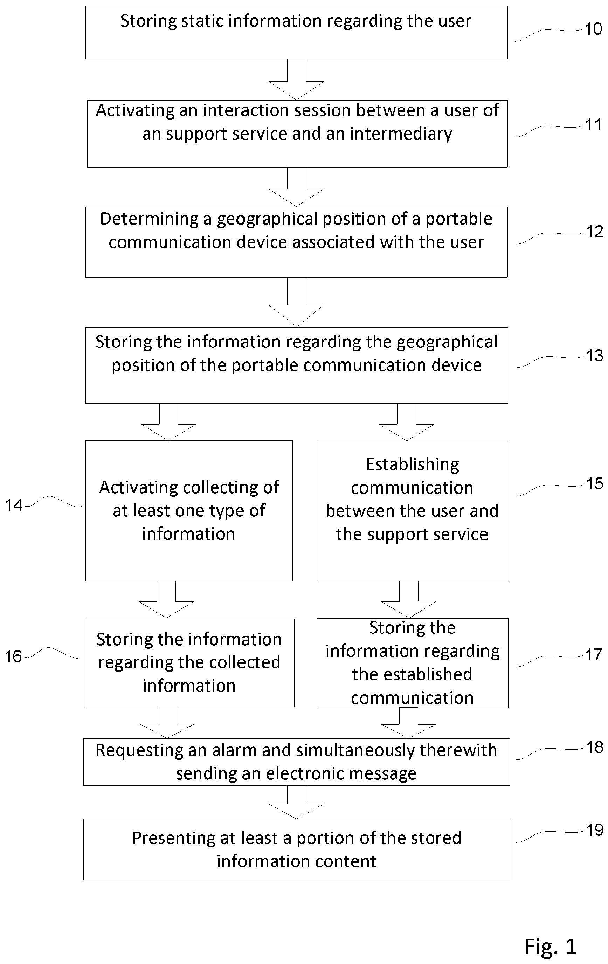

Fig. 1 shows a flow chart of the method for managing a potential emergency situation according to one embodiment of the invention. At first, static information regarding a user of a support service is stored 10. Here, the term static information is to be interpreted as encompassing various descriptive features usable to easily identify the user, such as height or hair colour. The static information could also be an image of the user, his/hers telephone number or address of residence. User's family members, and their contact information, may also appear in the static information. Static information may be stored at the intermediary.

An interaction session between the user of the support service and the support service being part of the intermediary is thereafter activated 11. The activation is typically done by providing at least user-entered details of an activity to the intermediary. However, this method step could also include a conventional logon-procedure. Typically, the intermediary further comprises an application back-end (not shown in Fig. 1) configured to communicate with a portable communication device associated with a user, a database (not shown in Fig. 1) configured to be in communication with the application back-end and configured to store data and an operator back-end (not shown in Fig. 1) configured to be in communication with the application back-end and to be in communication with the database.

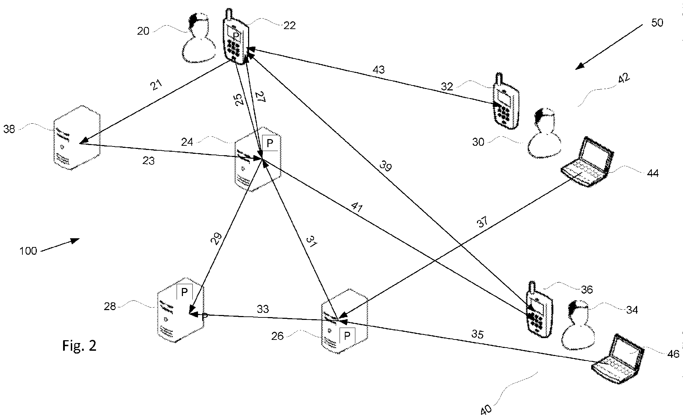

These constituents will be more thoroughly discussed in conjunction with Fig. 2.

In the sequential example shown below, intended to facilitate the comprehension, the user is on its way back home from a restaurant visit on foot and the connection between the user's portable communication device and the intermediary is of good quality at all times:
a) the user activates the interaction session,
b) the user is asked to enter the destination,
c) home is selected whereupon address, phone number and other relevant data featured in the static information, i.e. user's pre-stored profile, are made available to the intermediary,
d) the user is asked how she or he is travelling to the final destination - on foot is selected and this information is also made available to the intermediary,

A geographical position of a portable communication device associated with the user is subsequently determined 12 and stored 13. Returning to the example:
e) gps-coordinates of the user's portable communication device are tracked and continuously stored at the intermediary,

Now, if the user at any time during the on-going interaction session deems that the situation is becoming potentially dangerous, the collecting 14, by means of the portable communication device, of at least one type of information by the user is activated. The collected dynamic information would typically be audio or video files, images or text. Here, the collected information may be manipulated by means of the portable communication device prior to storing. In particular, the stream of the collected information content may be adjusted depending on the capacity of the network. For instance, redundant information in images may be removed and/or speechless sections of the audio recording may be excluded. Alternatively or as a complement, direct communication between the user and the support service may be established 15.

An envisageable alternative to the above is to remotely activate collecting of at least one type of information by the user, typically triggered by the operator at the support service. In this context, the user's consent should be obtained prior to activating remote collecting, e.g. at the beginning of the individual interaction session. In connection herewith, if the transmittal of the information to the intermediary is interrupted during an on-going interaction session, the operator may, if necessary, remotely reactivate the collecting of information. In a non-limiting embodiment, this may be done using conventional remote access techniques, preferably without employment of a dedicated server.The collected information is subsequently stored 16, 17. Returning once more to the example:
f) the user is approached by an unknown person,
g) the user turns on sound recording and the recording made is stored,

Continuing the example:
h) the situation escalates and the user feels threatened by the unknown person,
i) the user requests an alarm,

An alarm request 18 establishes a connection between the user and an entity of interest, such as an emergency service. Simultaneously therewith an electronic message is sent 18 from the portable communication device to the intermediary. As an alternative, a user-destined alarm inquiry, e.g. transmitting a push notification to the portable communication device associated with the user, based on at least one of the content of the stored static information, determined geographical position and the collected information, and/or content of the voice communication between the user and the intermediary may be made. The alarm inquiry is relayed by the intermediary to the user. By forwarding the alarm inquiry to the user, it is ensured that only the user may request an alarm. This solution confers upon the user a sensation of being in control of the situation - this could have a reassuring effect on him/her and in extension avoid unnecessary alarm requests. In any case, an alarm request may also be accompanied by various sounds and visual effects in order to deter the potential offender(s) from continuing the engagement. In conjunction herewith, if the alarm has been requested by mistake, it could be recalled within a predetermined time period. In this way, an inadvertent alarm request may be overruled. The time period is adjustable while its default value is about 10 seconds. The example continues:
j) the user interacts with the emergency service,

At least a portion of the stored dynamic information content is presented 19 at least to the interacting entity of interest, i.e. to the operator assigned to manage the situation. In the same context, this portion of the stored information content could even be presented to preselected recipient(s) appearing in the static information regarding the user and/or to the social media. Obviously, presenting another portion of the stored information content is equally conceivable. Hereby, further persons may, at the user's choice, be notified about the on-going emergency situation. By way of example, user's family members or Facebook® contacts may be informed. Completing the example:
k) the unknown person becomes deterred and goes away,
l) the user terminates the call and deactivates the interaction session once safely home.

The operator at the support service closely monitors the situation until the interaction session is deactivated by the user. In the same context, a push notification may be transmitted to the portable communication device associated with the user with the purpose of initiating termination of an interaction session. Such a notification may be issued if, for instance, any substantive information hasn't been collected by means of the activated portable communication device for a predetermined period of time. Hereby, all justified on-going interaction sessions, and in extension even alarm requests, are present in a system whereas the number of non-justified, but on-going interaction sessions, is continuously reduced. Obviously, this significantly alleviates the stress experienced by the operators.

If it on the other hand turns out that the situation escalates further and becomes truly dangerous for the user, the operator at the emergency service, having access to several types of contextualized information from the incident scene, is able to rapidly take the most appropriate measure, for instance contact the police department and direct them to the correct location and give them additional useful information. Obviously, when said operator of the emergency service contacts the suitable emergency authority there is a possibility to share at least a portion of the stored information content, static and/or dynamic.

It is to be noted that the method steps of the claims do not have to take place in the above order for the method to be properly executed. In the following, further positive effects and advantages are presented.

Since the user himself feeds the details of his imminent activity, such as the exemplified walk home or a taxi ride, into the system, a perfectly accurate data is obtained. This valuable data could not be easily obtained in any other way. Furthermore, in case of a legitimate alarm request, the user is directly connected to the entity of interest, such as the emergency service. In the same context, the personnel at the entity of interest may access collected information (e.g. static information regarding the user, and dynamic information in audio-, video-, or text format) as soon as an alarm has been requested. Clearly, this will facilitate their timely assessment of the situation at hand and allow them to rapidly take the most appropriate measure.

Furthermore, a connection between the portable communication device and the emergency service is established via a mobile communication network, such as GSM or UMTS, as soon as the alarm has been requested. Simultaneously therewith, an electronic message originating from the portable device is relayed to the intermediary, if necessary converted into a format readable by the intermediary.

In an embodiment and particularly useful in case of insufficient bandwidth, said first electronic message is at least in part transmitted to the intermediary as an SMS.

In a thereto related embodiment, a second electronic message is also sent from the portable communication device to the intermediary. Consequently, a redundant solution is achieved where the intermediary receives two messages via two signal paths that are independent of each other. A virtually fail-safe solution of notifying the intermediary that the alarm has been requested is hereby obtained. Needless to say, in emergency situations, it is crucial that the user is confident that his/hers alarm request will safely reach the destination.

As briefly discussed above, collected information may be stored either at the intermediary or on the mobile communication device. Storing at the intermediary ensures that the stored content is easily accessible for subsequent transmittal, preferably using a secure connection, to the emergency service. The content is initially stored by means of a send queue belonging to the portable communication device and is only removed from there upon acknowledgement from the intermediary that the content has reached it. A send queue is a container for a variable number of information packets that will be sent to the intermediary. Obviously, it is vital that the determined/collected information regarding the potential emergency situation is stored even in case of a temporary connection break-down between the portable communication device and the communication network, for instance due to poor coverage or the non-availability of the support service. To this end, the portable communication device is configured to store the content in the above-described manner.

On the more general level, support service could be any provider of security services present in the marketplace whereas the emergency service (reachable by dialling e.g. 112) typically is a non-commercial service funded by the state.

However, in some countries the emergency service that is free-of-charge for the citizens is complemented by a commercial branch with an offer equivalent to that of a conventional support service. Such a set-up would clearly allow for close coordination of the actions of the support service and the emergency service leading to significant synergies beneficial to the users.

Fig. 2 is a schematical drawing showing a system 100 well-suited for performing the method visualised in the flow chart of Fig. 1. More specifically, the system comprises an application back-end 24 configured to communicate with a portable communication device 22 associated with a user 20. The communication happens using a connection that is available at a given moment. More specifically, the communication up to the internet gateway, i.e. communication between the device and the gateway may be established using a Wi-Fi connection or a mobile communication network provided by the operator. Downstream of the gateway the communication may typically be established using Internet. In a non-limiting embodiment (not shown), the application back-end could consist of an application service and a notification service, for example implemented on a common server or each service implemented on separate servers. In the embodiment shown in Fig. 2 the alarm inquiry is made using a push message 27, i.e. a specially formatted SMS message. In case of an affirmative answer to the alarm inquiry an SMS is sent 21 to the application back-end via an SMS-gateway 38. This SMS-gateway is a network node connecting two networks that use different network protocols. In this particular case, the SMS is converted into a web service 23 destined for the application back-end 24. Moreover, another web service 25 is used to relay information from the mobile communication device 22 to the application back-end 24. In this context, a web service is a technology platform-independent method of communication between two electronic devices over a computer network such as Internet. Typically, a HTTP- or HTTPS-protocol is used in a such machine-to-machine interaction. Furthermore, a database 28 is provided, said database inter alia being configured to be in communication 29, 33 with the application back-end and the operator back-end and also configured to store data. An operator back-end 26 configured to be in communication with the application back-end 24 and to be in communication with the database 28 is also provided. The operator back-end could be implemented by means of a web server, i.e. a unit adapted to deliver web content that can be accessed through the Internet. Its primary purpose is to deliver web pages to its clients, in this case working terminals 44, 46 at the support 42 respectively emergency service 40 manned by the operators 30, 34. Obviously, these operators may also engage in telephonic conversations with the user 43, 39 using their respective communication device 32, 36. The operator back-end communicates 35, 37 with these clients over Internet using either HTTP- or HTTPS-protocol. A service bus 31 is established between the operator back-end and the application back-end. The service bus provides secure messaging and connectivity capabilities while supporting various communication and messaging protocols. As mentioned above, the application back-end, the database and the operator back-end are parts of an intermediary 50.

The system 100 further includes a software application running on the portable communication device 22. The application is configured to transmit data regarding geographical position of the portable communication device to the application back-end 24 for subsequent storing in the database 28. It is moreover configured to transmit data collected by the portable communication device and/or user-instigated communication to the application back-end for subsequent storing in the database 28. The application is also configured to send an electronic message from the portable communication device to the application back-end. This message is typically generated once an alarm has been requested. Either the application or the database is configured to store static information, i.e. user's pre-stored profile. The software application is native, i.e. it can interact with and take advantage of the functionalities of the operating system that are typically available on modern portable communication devices such as camera and tracking by means of GPS.

In an embodiment, application back-end, operator back-end and the database each have a memory unit (not shown) and a processing unit (not shown). The memory unit could be of the non-volatile kind. A dedicated, executable computer program (P) with computer instructions, or part of the dedicated, executable computer program (P) may be located in each memory unit. The processing unit is configured to carry out the instructions of the computer program (P), or part of the computer program (P). The computer program (P) could be recorded on a carrier, typically a computer readable medium, prior to being loaded onto the memory unit. Alternatively, it could be preinstalled in said memory unit. In the same context, a further dedicated, executable computer program (P') is associated with the software application. It may be stored in the memory of the mobile communication device and is then executed using its processing unit. The disclosed embodiments of the method are performed when the computer programs (P, P') or part of the computer program (P) are executed such that above-mentioned instructions are carried out by the suitably configured processing unit(s).

The system 100 further comprises means for establishing a connection 39, between the user 20 and an entity of interest 40, such as an emergency service, in case of an alarm request by the user. By way of an example, Session Initiation Protocol (SIP) could be used to establish the connection. This request is normally effectuated by pressing a virtual button appearing on the display of the portable communication device. It is subsequently relayed to the application back-end. The alarm is thereupon stored in the database. Notifications are subsequently issued to the concerned entities, notably the emergency service, but also, as discussed in conjunction with Fig. 1, to the other recipients such as family members. In the embodiment described in connection with Fig. 2, the emergency service is notified 41 by means of an SMS, but other alternatives are obviously envisageable. The system 100 also includes means for presenting at least a portion of the stored information content at least to the entity of interest 40. By way of an example, the stored content is upon request relayed 35 from the operator back-end to the entity of interest using Transmission Control Protocol (TCP) and the Internet Protocol (IP). The visualization part itself may be done via a secure webpage. Alternatively, it may be done in such a way that the information content is seamlessly integrated so that it is directly viewable by the entity of interest.

In addition to a conventional way of setting up the system of the above kind, i.e. by means of suitable hardware components, a system of the present invention could also be implemented using virtual hardware on a given hardware platform by employing a host software so as to create a simulated computer environment. Such an implementation offers a more flexible configuration and reduces the need for costly hardware resources. In a thereto related context, the system is configured to be run in a cloud environment. Hereby, the system becomes easily scalable such that it can accommodate a large influx of new users. Moreover, the system may be moved to a new host with very short lead times and without affecting the end user.

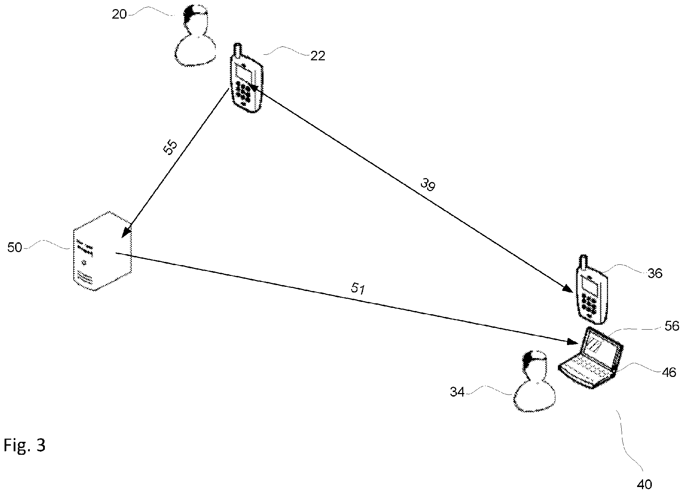

Fig. 3 is a further schematical drawing showing one way of verifying the authenticity of the requested alarm 55. Here the entity of interest 40, the emergency service, also receives a notification 51, issued by the intermediary 50, of the occurrence of the alarm and the authenticity of the alarm request is verified by the entity of interest 40 using at least one of at least the portion of the obtained information content presented to said entity of interest and the information contained in the received notification. Accordingly, the operator 34 at the entity of interest immediately gets access to the telephone number associated with the user's portable communication device 22 since this number will always be included in the content of said notification. This follows from the fact that the purpose of said notification is, for the current alarm request, to reserve a slot in the queue management scheme 56 used at the entity of interest 40. In this context, reserving a slot is a necessary system feature. This telephone number could then be compared with the number from which the actual alarm request is made. In conjunction herewith, the number from which the actual alarm request is made is either already visible on the display of the operator's telephone 36 or working terminal 46, or is given by the user at the start of his/hers communication session 39 with the operator of the emergency service. If the comparison checks out correctly, the authenticity of the alarm request is verified. Alternatively, above comparison may be performed using the information content presented to said entity of interest, e.g. the number associated with the user's portable communication device 22 could be pre-stored in the static information regarding the user 20.

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. A method for managing a potential emergency situation, the method comprising:
storing (10) static information regarding a user (20) of a support service (42), said static information containing at least the telephone number of a portable communication device (22) associated with the user (20),
activating (11) an interaction session between the user of a support service and an intermediary (50) by providing at least user-entered details of an activity to the intermediary,
determining (12) a geographical position of the portable communication device (22) associated with the user,
storing (13) the information regarding the geographical position of the portable communication device associated with the user,
activating collecting (14), by means of the portable communication device, of at least one type of information by the user and/or establishing communication (15) between the user and the intermediary,
storing the information (16) regarding the at least one type of information collected by the user and/or establishing communication (17) between the user and the intermediary,
requesting (18) an alarm such that a connection between the user and an entity of interest (40), such as an emergency service, is established and simultaneously therewith sending at least a first electronic message (21) from the portable communication device to the intermediary, and
presenting (19) at least a portion of the stored information content at least to the entity of interest, the method being **characterized in that**
the entity of interest (40) also receives a notification (51), issued by the intermediary (50), said notification including the telephone number of the user (20), and
comparing, at the entity of interest (40), the telephone number contained in the notification (51) either with the telephone number contained in said static information or with the telephone number obtained by the entity of interest (40) from the user (20) as a connection between the user (20) and the entity of interest (40) is established such that the authenticity of the requested alarm is verified by the entity of interest (40).

2. A method according to claim 1, wherein a second electronic message (25) is also sent from the portable communication device to the intermediary (50).

3. A method according to claim 1 or 2, wherein at least one of said first and second electronic messages (21, 25) is at least in part transmitted to the intermediary (50) as a web service.

4. A method according to any of the preceding claims, wherein said first electronic message (21) is at least in part transmitted to the intermediary (50) as an SMS.

5. A method according to any of the preceding claims, wherein at least one of the stored static information, determined geographical position, the collected information and/or content of the communication between the user (20) and the intermediary (50) is stored at the intermediary.

6. A method according to any of the preceding claims, wherein at least one of the stored static information, determined geographical position, the collected information and/or content of the communication between the user (20) and the intermediary (50) is initially stored on the portable communication device.

7. A method according to any of the preceding claims, said method comprising
manipulating, by means of the portable communication device, at least one type of information collected by the user.

8. A method according to any of the preceding claims, said method further comprising making a user-destined alarm inquiry (27) based on at least one of the content of the stored static information, determined geographical position and the collected information, and/or content of the voice communication between the user (20) and the intermediary (50).

9. A method according to any of the preceding claims, said method comprising
assessing, by means of the intermediary (50) and based on at least one of the content of the stored static information, determined geographical position and the collected information, and/or content of the voice communication between the user and the intermediary, the overall emergency level of the situation.

10. A system (100) for managing a potential emergency situation comprising:
an application back-end (24) configured to communicate with a portable communication device (22) associated with a user (20);
a database (28) configured to be in communication with the application back-end and configured to store data;
an operator back-end (26) configured to be in communication with the application back-end and to be in communication with the database, and
a software application located on the portable communication device (22), said application being configured to transmit data regarding geographical position of the portable communication device to the application back-end for subsequent storing in the database (28),
said software application further being configured to transmit data collected by the portable communication device and/or user-instigated communication to the application back-end (24) for subsequent storing in the database and simultaneously therewith send at least a first electronic message (21) from the portable communication device to the application back-end, wherein
the application itself or the database are configured to store static information regarding the user, said static information containing at least the telephone number of the portable communication device (22) associated with the user (20), and
wherein the system further comprises means for establishing a connection between the user and an entity of interest (40), such as an emergency service, in case of an alarm request by the user, and means for presenting at least a portion of the stored information content at least to the entity of interest said system being **characterized in that** the operator back-end (26) issues a notification (51) of the occurrence of the alarm, said notification including the telephone number of the user (20) and **in that** the entity of interest (40) compares the telephone number contained in the notification (51) either with the telephone number contained in said static information or with the telephone number obtained by the entity of interest (40) from the user (20) as a connection between the user (20) and the entity of interest (40) is established such that the authenticity of the requested alarm is verified by the entity of interest (40).

11. A system according to claim 10, wherein a second electronic message (25) is also sent from the portable communication device (22) to the application back-end (24).

12. A system according to claim 10 or 11, wherein at least one of said first and second electronic messages (21, 25) is at least in part transmitted to the application back-end (24) as a web service.

13. A system according to any of claims 10-12, wherein said first electronic message (21) is at least in part transmitted to the application back-end (24) as an SMS.

14. A system (100) according to any of claims 10-13, wherein the operator back-end (26) is configured to make a user-destined alarm inquiry (27), based on the content of the stored static information, determined geographical position, the collected information and/or content of the user-instigated communication.

## Patentansprüche

1. Verfahren zum Verwalten einer potenziellen Notfallsituation, wobei das Verfahren Folgendes umfasst:
Speichern (10) von statischen Informationen in Bezug auf einen Nutzer (20) eines Support-Services (42), wobei die statischen Informationen zumindest die Telefonnummer eines tragbaren Kommunikationsgeräts (22), das mit dem Nutzer (20) assoziiert wird, enthalten,
Aktivieren (11) einer Interaktionssitzung zwischen dem Nutzer eines Support-Services und einem Vermittler (50), indem dem Vermittler zumindest vom Nutzer angegebene Details zu einer Aktivität bereitgestellt werden,
Bestimmen (12) einer geographischen Position des tragbaren Kommunikationsgeräts (22), das mit dem Nutzer assoziiert wird,
Speichern (13) der Informationen in Bezug auf die geographische Position des tragbaren Kommunikationsgeräts, das mit dem Nutzer assoziiert wird,
Aktivieren des Sammelns (14), mittels des tragbaren Kommunikationsgeräts, von zumindest einer Art von Information vom Nutzer und/oder Aufbauen von Kommunikation (15) zwischen dem Nutzer und dem Vermittler,
Speichern der Informationen (16) in Bezug auf die zumindest eine Art von Information, die vom Nutzer gesammelt wurde und/oder Aufbauen von Kommunikation (17) zwischen dem Nutzer und dem Vermittler,
Anfordern (18) eines Alarms, sodass eine Verbindung zwischen dem Nutzer und einer Einheit von Interesse (40), wie zum Beispiel einem Notfalldienst, hergestellt wird und simultan dazu Senden von zumindest einer ersten elektronischen Nachricht (21) von dem tragbaren Kommunikationsgerät an den Vermittler, und
Präsentieren (19) von zumindest einem Teil des gespeicherten Informationsinhalts zumindest der Einheit von Interesse, wobei das Verfahren **dadurch gekennzeichnet ist, dass**
die Einheit von Interesse (40) auch eine vom Vermittler (50) ausgegebene Benachrichtigung (51) erhält, wobei die Benachrichtigung die Telefonnummer des Nutzers (20) enthält, und
Vergleichen, bei der Einheit von Interesse (40), der in der Benachrichtigung (51) enthaltenen Telefonnummer entweder mit der in den statischen Informationen enthaltenen Telefonnummer oder mit der von der Einheit von Interesse (40) durch den Nutzer (20) erhaltenen Telefonnummer, während eine Verbindung zwischen dem Nutzer (20) und der Einheit von Interesse (40) aufgebaut wird, sodass die Authentizität des angeforderten Alarms von der Einheit von Interesse (40) geprüft wird.

2. Verfahren nach Anspruch 1, wobei eine zweite elektronische Nachricht (25) ebenfalls vom tragbaren Kommunikationsgerät an den Vermittler (50) gesendet wird.

3. Verfahren nach Anspruch 1 oder 2, wobei zumindest eine von der ersten und zweiten elektronischen Nachricht (21, 25) zumindest teilweise als Web-Service an den Vermittler (50) übermittelt wird.

4. Verfahren nach einem der vorhergehenden Ansprüche, wobei die erste elektronische Nachricht (21) zumindest teilweise als SMS an den Vermittler (50) übermittelt wird.

5. Verfahren nach einem der vorhergehenden Ansprüche, wobei zumindest eines von den gespeicherten statischen Informationen, der bestimmten geographischen Position, den gesammelten Informationen und/oder dem Inhalt der Kommunikation zwischen dem Nutzer (20) und dem Vermittler (50) beim Vermittler gespeichert wird.

6. Verfahren nach einem der vorhergehenden Ansprüche, wobei zumindest eines von den gespeicherten statischen Informationen, der bestimmten geographischen Position, den gesammelten Informationen und/oder dem Inhalt der Kommunikation zwischen dem Nutzer (20) und dem Vermittler (50) zunächst auf dem tragbaren Kommunikationsgerät gespeichert wird.

7. Verfahren nach einem der vorhergehenden Ansprüche, wobei das Verfahren das Manipulieren von zumindest einer Art von Information, die vom Nutzer gesammelt wurde, mittels des tragbaren Kommunikationsgeräts umfasst.

8. Verfahren nach einem der vorhergehenden Ansprüche, wobei das Verfahren weiter das Durchführen einer für den Nutzer bestimmten Alarmanfrage (27) basierend auf zumindest einem von dem Inhalt der gespeicherten statischen Informationen, der bestimmten geographischen Position und den gesammelten Informationen und/oder dem Inhalt der Sprachkommunikation zwischen dem Nutzer (20) und dem Vermittler (50) umfasst.

9. Verfahren nach einem der vorhergehenden Ansprüche, wobei das Verfahren das Bewerten der Gesamtnotfallstufe der Situation durch den Vermittler (50) und basierend auf zumindest einem von dem Inhalt der gespeicherten statischen Informationen, der bestimmten geographischen Position und den gesammelten Informationen und/oder dem Inhalt der Sprachkommunikation zwischen dem Nutzer und dem Vermittler umfasst.

10. System (100) zum Verwalten einer potenziellen Notfallsituation, umfassend:
ein Anwendungs-Back-End (24), das konfiguriert ist, um mit einem tragbaren Kommunikationsgerät (22), das mit einem Nutzer (20) assoziiert wird, zu kommunizieren;
eine Datenbank (28), die konfiguriert ist, um in Kommunikation mit dem Anwendungs-Back-End zu stehen und konfiguriert ist, um Daten zu speichern;
ein Betreiber-Back-End (26), das konfiguriert ist, um in Kommunikation mit dem Anwendungs-Back-End zu stehen und um in Kommunikation mit der Datenbank zu stehen, und
eine Softwareanwendung, die sich auf dem tragbaren Kommunikationsgerät (22) befindet, wobei die Anwendung konfiguriert ist, um Daten in Bezug auf die geographische Position des tragbaren Kommunikationsgeräts zum anschließenden Speichern in der Datenbank (28) an das Anwendungs-Back-End zu übertragen,
wobei die Softwareanwendung weiter konfiguriert ist, um von dem tragbaren Kommunikationsgerät gesammelte Daten und/oder vom Nutzer eingeleitete Kommunikation zum anschließenden Speichern in der Datenbank an das Anwendungs-Back-End (24) zu übertragen und simultan dazu mindestens eine erste elektronische Nachricht (21) vom tragbaren Kommunikationsgerät an das Anwendungs-Back-End zu senden, wobei die Anwendung selbst oder die Datenbank konfiguriert sind, um statische Informationen in Bezug auf den Nutzer zu speichern, wobei die statischen Informationen zumindest die Telefonnummer des tragbaren Kommunikationsgeräts (22), das mit dem Nutzer (20) assoziiert wird, enthalten, und
wobei das System weiter Mittel zum Aufbau einer Verbindung zwischen dem Nutzer und einer Einheit von Interesse (40), wie zum Beispiel einem Notfall-Service, im Falle einer Alarmanforderung vom Nutzer und Mittel zum Präsentieren von zumindest einem Teil des gespeicherten Informationsinhalts zumindest der Einheit von Interesse umfasst, wobei das System **dadurch gekennzeichnet ist, dass** das Betreiber-Back-End (26) eine Benachrichtigung (51) über das Auftreten des Alarms ausgibt, wobei die Benachrichtigung die Telefonnummer des Nutzers (20) enthält, und dass die Einheit von Interesse (40) die in der Benachrichtigung (51) enthaltene Telefonnummer entweder mit der in den statischen Informationen enthaltenen Telefonnummer oder mit der von der Einheit von Interesse (40) durch den Nutzer (20) erhaltenen Telefonnummer vergleicht,
während eine Verbindung zwischen dem Nutzer (20) und der Einheit von Interesse (40) aufgebaut wird, sodass die Authentizität des angeforderten Alarms von der Einheit von Interesse (40) geprüft wird.

11. System nach Anspruch 10, wobei eine zweite elektronische Nachricht (25) ebenfalls vom tragbaren Kommunikationsgerät (22) an das Anwendungs-Back-End (24) gesendet wird.

12. System nach Anspruch 10 oder 11, wobei zumindest eine von der ersten und zweiten elektronischen Nachricht (21, 25) zumindest teilweise als Web-Service an das Anwendungs-Back-End (24) übertragen wird.

13. System nach einem der Ansprüche 10-12, wobei die erste elektronische Nachricht (21) zumindest teilweise als SMS an das Anwendungs-Back-End (24) übertragen wird.

14. System (100) nach einem der Ansprüche 10-13, wobei das Betreiber-Back-End (26) konfiguriert ist, um eine für den Nutzer bestimmte Alarmanfrage (27) zu tätigen, basierend auf dem Inhalt der gespeicherten statischen Informationen, der bestimmten geographischen Position, den gesammelten Informationen und/oder dem Inhalt der vom Nutzer eingeleiteten Kommunikation.

## Revendications

1. Procédé de gestion d'une situation d'urgence potentielle, le procédé comprenant :
le stockage (10) d'informations statiques concernant un utilisateur (20) d'un service de maintenance (42), lesdites informations statiques contenant au moins le numéro de téléphone d'un dispositif de communication portable (22) associé à l'utilisateur (20),
l'activation (11) d'une session d'interaction entre l'utilisateur d'un service de maintenance et un intermédiaire (50) en fournissant au moins des détails entrés par utilisateur d'une activité à l'intermédiaire,
la détermination (12) d'une position géographique du dispositif de communication portable (22) associé à l'utilisateur,
le stockage (13) des informations concernant la position géographique du dispositif de communication portable associé à l'utilisateur,
l'activation de collecte (14), au moyen du dispositif de communication portable, d'au moins un type d'informations par l'utilisateur, et/ou l'établissement d'une communication (15) entre l'utilisateur et l'intermédiaire,
le stockage des informations (16) concernant l'au moins un type d'informations collectées par l'utilisateur et/ou l'établissement d'une communication (17) entre l'utilisateur et l'intermédiaire,
la demande (18) d'une alarme de sorte qu'une connexion entre l'utilisateur et une entité d'intérêt (40), telle qu'un service d'urgence, soit établie et simultanément à celle-ci,
l'envoi d'au moins un premier message électronique (21) du dispositif de communication portable à l'intermédiaire, et
la présentation (19) d'au moins une portion du contenu d'informations stockées au moins à l'entité d'intérêt, le procédé étant **caractérisé en ce que**
l'entité d'intérêt (40) reçoit également une notification (51), émise par l'intermédiaire (50), ladite notification comportant le numéro de téléphone de l'utilisateur (20), et
la comparaison, au niveau de l'entité d'intérêt (40), du numéro de téléphone contenu dans la notification (51) soit avec le numéro de téléphone contenu dans lesdites informations statiques soit avec le numéro de téléphone obtenu par l'entité d'intérêt (40) auprès de l'utilisateur (20) lorsqu'une connexion entre l'utilisateur (20) et l'entité d'intérêt (40) est établie de sorte que l'authenticité de l'alarme demandée soit vérifiée par l'entité d'intérêt (40).

2. Procédé selon la revendication 1, dans lequel un second message électronique (25) est également envoyé du dispositif de communication portable à l'intermédiaire (50).

3. Procédé selon la revendication 1 ou 2, dans lequel au moins l'un desdits premier et second messages électroniques (21, 25) est au moins en partie transmis à l'intermédiaire (50) en tant que service Web.

4. Procédé selon l'une quelconque des revendications précédentes, dans lequel ledit premier message électronique (21) est au moins en partie transmis à l'intermédiaire (50) en tant que SMS.

5. Procédé selon l'une quelconque des revendications précédentes, dans lequel au moins l'un des informations statiques stockées, de la position géographique déterminée, des informations collectées et/ou du contenu de la communication entre l'utilisateur (20) et l'intermédiaire (50) est stocké au niveau de l'intermédiaire.

6. Procédé selon l'une quelconque des revendications précédentes, dans lequel au moins l'un des informations statiques stockées, de la position géographique déterminée, des informations collectées et/ou du contenu de la communication entre l'utilisateur (20) et l'intermédiaire (50) est initialement stocké sur le dispositif de communication portable.

7. Procédé selon l'une quelconque des revendications précédentes, ledit procédé comprenant :
la manipulation, au moyen du dispositif de communication portable, d'au moins un type d'informations collectées par l'utilisateur.

8. Procédé selon l'une quelconque des revendications précédentes, ledit procédé comprenant en outre la réalisation d'une requête d'alarme destinée à l'utilisateur (27) d'après au moins l'un du contenu des informations statiques stockées, de la position géographique déterminée et des informations collectées, et/ou du contenu de la communication vocale entre l'utilisateur (20) et l'intermédiaire (50).

9. Procédé selon l'une quelconque des revendications précédentes, ledit procédé comprenant
l'évaluation, au moyen de l'intermédiaire (50) et d'après au moins l'un du contenu des informations statiques stockées, de la position géographique déterminée et des informations collectées, et/ou du contenu de la communication vocale entre l'utilisateur et l'intermédiaire, du niveau d'urgence global de la situation.

10. Système (100) de gestion d'une situation d'urgence potentielle comprenant :
une dorsale d'application (24) configurée pour communiquer avec un dispositif de communication portable (22) associé à un utilisateur (20) ;
une base de données (28) configurée pour être en communication avec la dorsale d'application et configurée pour stocker des données ;
une dorsale d'opérateur (26) configurée pour être en communication avec la dorsale d'application et pour être en communication avec la base de données, et
une application logicielle située sur le dispositif de communication portable (22), ladite application étant configurée pour transmettre des données concernant une position géographique du dispositif de communication portable à la dorsale d'application pour un stockage ultérieur dans la base de données (28),
ladite application logicielle étant en outre configurée pour transmettre des données collectées par le dispositif de communication portable et/ou une communication à l'instigation de l'utilisateur à la dorsale d'application (24) pour un stockage ultérieur dans la base de données et simultanément à cela envoyer au moins un premier message électronique (21) du dispositif de communication portable à la dorsale d'application, dans lequel
l'application elle-même ou la base de données est configurée pour stocker des informations statiques concernant l'utilisateur, lesdites informations statiques contenant au moins le numéro de téléphone du dispositif de communication portable (22) associé à l'utilisateur (20), et
dans lequel le système comprend en outre un moyen pour établir une connexion entre l'utilisateur et une entité d'intérêt (40),
telle qu'un service d'urgence, dans le cas d'une demande d'alarme par l'utilisateur, et un moyen pour présenter au moins une portion du contenu d'informations stockées au moins à l'entité d'intérêt, ledit système étant **caractérisé en ce que** la dorsale d'opérateur (26) émet une notification (51) de la survenue de l'alarme, ladite notification comportant le numéro de téléphone de l'utilisateur (20), et **en ce que** l'entité d'intérêt (40) compare le numéro de téléphone contenu dans la notification (51) soit avec le numéro de téléphone contenu dans lesdites informations statiques soit avec le numéro de téléphone obtenu par l'entité d'intérêt (40) auprès de l'utilisateur (20) lorsqu'une connexion entre l'utilisateur (20) et l'entité d'intérêt (40) est établie de sorte que l'authenticité de l'alarme demandée soit vérifiée par l'entité d'intérêt (40).

11. Système selon la revendication 10, dans lequel un second message électronique (25) est également envoyé du dispositif de communication portable (22) à la dorsale d'application (24).

12. Système selon la revendication 10 ou 11, dans lequel au moins l'un desdits premier et second messages électroniques (21, 25) est au moins en partie transmis à la dorsale d'application (24) en tant que service Web.

13. Système selon l'une quelconque des revendications 10 à 12, dans lequel ledit premier message électronique (21) est au moins en partie transmis à la dorsale d'application (24) en tant que SMS.

14. Système (100) selon l'une quelconque des revendications 10 à 13, dans lequel la dorsale d'opérateur (26) est configurée pour réaliser une requête d'alarme destinée à l'utilisateur (27), d'après le contenu des informations statiques stockées, la position géographique déterminée, les informations collectées et/ou le contenu de la communication à l'instigation de l'utilisateur.
